# EUROPÄISCHE PATENTANMELDUNG

(11) **EP 4 199 010 A1**
(43) Veröffentlichungstag der Anmeldung: **21.06.2023**
(21) Anmeldenummer: 22213850.5
(22) Anmeldetag: 15.12.2022
(51) Int. Cl.: H01B 13/012, B29C 35/08

(54) **VERFAHREN ZUR UMMANTELUNG VON STRANGFÖRMIGEN ELEMENTEN**

(30) Priorität: 16.12.2021 DE 102021133426
(71) Anmelder: tesa SE, 22848 Norderstedt (DE)
(72) Erfinder: WIENZEK, Tristan, 22885 Barsbüttel (DE); MACKETANZ, Lars, 22529 Hamburg (DE); GULDBRANDSEN, Lars, 22885 Barsbüttel (DE); PENNEKAMP, Jan-Gerd, 22041 Hamburg (DE); GERDSMANN, Thomas, 22529 Hamburg (DE); RICHTER, Dr. Gerhard, 22848 Norderstedt (DE)
(74) Vertreter: tesa SE

(57) **Zusammenfassung**

Die Erfindung betrifft ein Verfahren zur Ummantelung von strangförmigen Elementen (10), umfassend die Verfahrensschritte: a) Herstellen oder Bereitstellen eines strangförmigen Elementes (10), b) Umwickeln des strangförmigen Elementes (10) mit einem Klebeband (12) zum Erhalt eines umwickelten Strangs (14), wobei das Klebeband (12) als aushärtbare Klebemasse eine strahlungshärtende und/oder thermisch härtende Klebemasse umfasst, c) Anordnen des umwickelten Strangs (14) in einem oder mehreren Halteelementen (16) einer Halteanordnung (18) zur Einstellung einer vorbestimmten Form und zum Erhalt eines geformten Strangs (20), und d) Aushärten der aushärtbaren Klebemasse im geformten Strang (20) durch Bestrahlen des Klebebandes (12) mit elektromagnetischer Strahlung einer Wellenlänge λ zum Erhalt eines ummantelten Strangs (22), wobei das eine oder die mehreren Halteelemente (16) zumindest abschnittweise für elektromagnetische Strahlung der Wellenlänge λ zumindest teilweise durchlässig sind, wobei die Bestrahlung des Klebebandes (12) mit der elektromagnetischen Strahlung der Wellenlänge λ zumindest teilweise durch das eine oder die mehreren Halteelemente (16) hindurch erfolgt.

## Beschreibung

Die Erfindung betrifft ein Verfahren zur Ummantelung von strangförmigen Elementen, insbesondere von Kabelsträngen bei der Fertigung von Kabelbäumen, sowie eine hierfür geeignete Halteanordnung zur Einstellung einer vorbestimmten Struktur eines geformten Stranges und ein zugehöriges System. Offenbart wird zudem ein mit dem Verfahren ummantelter Strang.

Moderne Fahrzeuge umfassen heutzutage eine Vielzahl von elektronischen Geräten, die über eine zumeist komplexe Verkabelung miteinander verbunden werden müssen. Um die hierfür nötigen Kabel im Inneren des Fahrzeuges möglichst platzsparend und sicher anzuordnen sowie zusätzlich einen Schutz gegen mechanische und/oder thermische Beanspruchung bzw. gegen das unerwünschte Eindringen von Feuchtigkeit bereitzustellen, werden zumeist sogenannte Kabelbäume eingesetzt, in denen die Kabel von geeigneten Ummantelungen umgeben sind. In solchen Kabelbäumen werden die geführten Kabelstränge regelmäßig von einem rigiden Kabelkanal ummantelt, der beispielsweise mittels Spritzgießen hergestellt werden kann.

Der übliche Prozess der Herstellung von derart ummantelten Kabelbäumen umfasst dabei neben der Konfektionierung und Zusammenstellung der Kabel zumeist auch eine zumindest vorläufige Verbindung der Kabel sowie die Anordnung des resultierenden Kabelstrangs in einem spritzgegossenen Kanal. Der Aufbau entsprechender Kabelkanäle sowie die Herstellung des ummantelten Kabelbaums wird aus fertigungstechnischer Hinsicht häufig als komplex und anspruchsvoll empfunden, wobei insbesondere regelmäßig ein großer apparativer Aufwand von Nöten ist, beispielsweise, wenn der zur Ummantelung verwendete Kabelkanal mittels Spritzgusses hergestellt werden soll. Das aus dem Stand der Technik bekannte Verfahren, wie es beispielsweise in der EP 3763575 A1 oder der US 6969319 A offenbart ist, wird entsprechend zumeist nicht als zeit- und kosteneffizient empfunden, wobei insbesondere der benötigte apparative Aufwand gerade von kleineren Betrieben häufig nicht geleistet werden kann. Zudem erfordert der vergleichsweise komplexe Herstellungsprozess zumeist gut ausgebildete und erfahrene Arbeitskräfte, um Fertigungsfehler zuverlässig vermeiden zu können. Als Nachteil des aus dem Stand der Technik bekannten Verfahrens wird insbesondere gesehen, dass dieses zumeist nur umständlich auf veränderte Makrostrukturen des Kabelbaums, d.h. verschiedene Kabelsatzpläne, wie sie beispielsweise für zwei verschiedene Fahrzeuge benötigt werden, umgestellt werden können, weil beispielsweise separat angepasste Spritzgusswerkzeuge benötigt werden.

Bei dem in der EP 3763575 A1 beschriebenen Verfahren ist die präzise Positionierung der Kabel in der Form nicht möglich. Aufgrund der Tatsache, dass ein flüssiges Harz die Kabel umfließen soll, ist eine Ausgestaltung des Kabelbaums in allen drei Dimensionen - üblicherweise weist jeder Kabelbaum einen Verlauf in all drei Dimensionen auf - nicht möglich, das heißt, es können nur zweidimensional gestaltete Kabelbäume in einem Arbeitsgang umgossen werden. Weiterhin nachteilig ist, dass unterschiedlich dicke Harzschichten zum Aushärten durchleuchtet werden müssen. Diese Materialanhäufungen benötigen einen höheren Energieeintrag. Des Weiteren ergeben sich zwischen den Kabeln Schattenräume, in die kein UV-Licht durchdringt, das heißt, das Harz in diesem Räumen härtet nicht oder nicht vollständig aus, so dass im Laufe der Zeit die Wandung der Kabel durch das nichtausgehärtete Harz angegriffen werden können. Insgesamt wird sehr viel Harz benötigt.

Eine vor allem mit Blick auf die Anpassungsmöglichkeit an verschiedene Makrostrukturen vielversprechende Alternative stellt der Einsatz von Klebebändern zum Ummanteln von Kabelsträngen dar, insbesondere da Klebebänder in den herkömmlichen Verfahren häufig ohnehin bereits zur Bündelung der einzelnen Kabel verwendet werden. Zumindest in der Theorie erscheint es deshalb vielversprechend, Kabelbäume durch eine im Wesentlichen vollständige Umwicklung mit Klebebändern auszubilden. Derart mit Klebeband umwickelte Kabelstränge sind jedoch in der Regel flexibel, was insbesondere mit Blick auf eine exakte Einpassung der Kabelbäume in ein Fahrzeug sowie die mechanische Widerstandsfähigkeit der Kabelbäume gegen mechanische Belastung als nachteilig angesehen wird, da entsprechende flexible Kabelbäume im Fahrzeug zusätzlich fixiert werden müssten, damit sie nicht verrutschen.

Zur Lösung dieser Problematik wird vorgeschlagen, dass durch den Einsatz von Klebebändern mit aushärtbaren Klebemassen ein besonders vorteilhaftes Verfahren zur Ummantelung von strangförmigen Elementen, beispielsweise Kabelbäumen, erhalten werden kann. Dieses sieht vor, dass die zu ummantelnden strangförmigen Elemente mit einem Klebeband umwickelt werden, welches eine reaktive Klebemasse umfasst, d. h. eine Klebemasse, welche durch äußere Einflüsse, beispielsweise Strahlung, thermische Energie oder chemische Reaktion mit einem Vernetzer ausgehärtet werden kann und deren dadurch erreichte Festigkeit für einen langen Zeitraum eine chemisch und physikalisch hoch beanspruchbare Verklebung ermöglicht, durch die eine rigide Struktur des ummantelten strangförmigen Elements vorgegeben werden kann. Dieses Verfahren ist regelmäßig deutlich zeit- und kosteneffizienter als die aus dem Stand der Technik bekannten Verfahren, welche beispielsweise einen spritzgegossenen Kabelkanal vorsehen. Zudem ermöglicht es dieses Verfahren, in vorteilhafter Weise mit nur geringfügigem apparativen Aufwand leistungsfähige Kabelbäume herzustellen, welche zudem sehr flexibel an unterschiedliche Makrostrukturen, bspw. unterschiedliche Kabelsatzpläne, angepasst werden können, ohne dass weitreichende Änderungen an den verwendeten Vorrichtungen nötig sind.

Durch dieses Konzept wird nicht nur der Gesamtprozess der Herstellung von ummantelten Kabelbäumen vereinfacht, sondern es kann zumeist auch eine Volumenersparnis erreicht werden, sodass der benötigte Bauraum verkleinert werden kann, wenn das reaktive Klebeband selbst den formgebenden Teil des Kabelbaums bildet, welcher vor dem Aushärten in die gewünschte Form gebracht wird. Zudem ist dieses Verfahren gegenüber dem aus dem Stand der Technik bekannten Verfahren regelmäßig mit einer Reduktion des Gesamtgewichts des resultierenden ummantelten Kabelbaums verbunden.

Ausgehend von dieser überaus vorteilhaften Verfahrensführung zur Herstellung von ummantelten Elementen, beispielsweise Kabelbäumen, haben die Erfinder erkannt, dass die große Herausforderung dieses Verfahrens jedoch in einer zuverlässigen Formgebung für den geformten Strang und einer reproduzierbaren und zuverlässigen Aushärtung der Klebebänder besteht.

Trotz der vorstehend beschriebenen Nachteile des herkömmlichen Verfahrens mit beispielsweise spritzgegossenen Ummantelungen ist dieses zumindest insoweit vorteilhaft, dass die Einpassung der strangförmigen Elemente in die Ummantelung zumeist vergleichsweise zuverlässig erfolgen kann und die äußere Kontur des ummantelten Kabelstrangs präzise definiert werden kann. Die Ausformung eines lediglich mit nicht-gehärtetem Klebeband ummantelten strangförmigen Elements erweist sich in der Praxis hingegen als durchaus herausfordernd. Der mit dem noch nicht ausgehärteten Klebeband ummantelte Strang muss vor dem Aushärten nämlich in die gewünschte Form gebracht werden, wobei die Rigidität des zu formenden Materials niedrig ist. Beim Aufspannen der Makrostruktur über das Anordnen des Stranges in den Halteelementen einer Haltevorrichtung besteht beispielsweise die Gefahr, dass das strangförmige Element zwischen zwei Trägerelementen durchhängt, wodurch ein unzureichend geformter ummantelter Strang erhalten würde.

Bei solchen aushärtbaren Klebemassen, welche beispielsweise ausschließlich durch thermische Energie ausgehärtet werden sollen, beispielsweise in einem Ofen, kann diese Problematik zumindest teilweise durch den Einsatz einer großen Zahl an Halteelementen gelöst werden, die in einem möglichst geringen Abstand voneinander platziert werden und damit eine Aufnahme für den geformten Strang bilden, durch den dieser eng geführt wird. Dieser Lösungsansatz ist jedoch für einen Teil der möglichen aushärtbaren Klebebänder mit großen Nachteilen verbunden, nämlich für solche Klebebänder, welche durch den Einsatz von elektromagnetischer Strahlung ausgehärtet werden sollen.

Entsprechende Klebebänder, deren Haftklebemassen durch elektromagnetische Strahlung ausgehärtet werden, beispielsweise unmittelbar durch UV-Strahlung oder indirekt durch thermische Energie, welche durch IR-Strahlung in das System eingetragen wird, sind hinsichtlich der Zeit- und Kosteneffizienz der Verarbeitung, des benötigen apparativen Aufwands sowie der regelmäßig zu erreichenden mechanischen Belastbarkeit der resultierenden Ummantelung aber überaus bevorzugt, so dass die Einschränkung in der Praxis schwer wiegt.

Jedes Halteelement, welches am mit ungehärtetem Klebeband ummantelten Strang anliegt, schirmt einen Teil des unterliegenden Klebebandes gegen die zur Aushärtung benötigte elektromagnetische Strahlung ab. Gleichzeitig ist die durch elektromagnetische Strahlung induzierte Aushärtung zumeist lokal relativ begrenzt, sodass auch eine Reaktionswanderung der Aushärtung, d.h. eine Ausbreitung der Härtung in die von den Trägerelementen überdeckten Bereiche hinein, zumeist nicht ausreichend ist, um über den gesamten ummantelten Strang hinweg eine ausreichende Aushärtung zu erreichen. Insbesondere beim Einsatz einer großen Anzahl von Trägerelementen und/oder von Trägerelementen, welche zum Zwecke einer guten Formanpassung über vergleichsweise breite Aufnahmen für den geformten Strang verfügen, besteht beim Einsatz von strahlenhärtenden Klebemassen somit regelmäßig die Gefahr, dass durch eine unzureichende Härtung Schwachstellen in der geformten Ummantelung erzeugt werden. Diese Schwachstellen können beim späteren Einsatz im Fahrzeug zu einem Materialversagen in der Ummantelung führen, wodurch im schlechtesten Fall eine Beschädigung der Verkabelung resultieren kann.

Die Aufgabe der vorliegenden Erfindung war es, die vorstehend beschriebenen Nachteile des Standes der Technik zu beseitigen oder zumindest zu verringern.

Insbesondere war es die Aufgabe der vorliegenden Erfindung, ein Verfahren zur Ummantelung von strangförmigen Elementen, insbesondere Kabelsträngen, anzugeben, mit dem ein ummantelter Strang erhalten wird, welcher über eine hohe Rigidität und eine ausgezeichnete mechanische Belastbarkeit verfügt und dabei möglichst wenig Schwachstellen im Material aufweist, die aus einer unzureichenden Härtung resultieren würden.

Insoweit war es die Aufgabe der vorliegenden Erfindung, ein Verfahren anzugeben, welches besonders zeit- und kosteneffizient sowie ohne großen apparativen Aufwand eingesetzt werden kann, um leistungsfähige Ummantelungen von strangförmigen Elementen zu erreichen, insbesondere unter Einsatz von vorteilhaften Klebemassen, welche durch Bestrahlung mit elektromagnetischer Strahlung ausgehärtet werden können.

Es war eine ergänzende Aufgabe der vorliegenden Erfindung, dass die mit dem anzugebenden Verfahren herzustellenden ummantelten Stränge besonders präzise auf eine vorbestimmte Makrostruktur einstellbar sein sollten, wobei wünschenswerterweise nicht nur eine besonders glatte Oberfläche der Ummantelung, sondern auch eine besonders dichte Struktur mit einer engen Anpassung der Ummantelung an die ummantelten Elemente erreicht werden sollte.

Insoweit war es eine weitere Aufgabe der vorliegenden Erfindung, dass mit dem anzugebenden Verfahren auch komplexe Makrostrukturen, beispielsweise Kabelbäume deren Kabelsatzpläne eine Vielzahl von Gabelungen aufweisen, zuverlässig und präzise gefertigt werden können.

Dabei war es wünschenswert, dass mit dem anzugebenden Verfahren der komplexe Schritt der Formung von mit nicht ausgehärtetem Klebeband umwickelten strangförmigen Elementen dahingehend vereinfacht werden kann, dass der Schritt der Formung auch von unerfahrenen Arbeitskräften zuverlässig und reproduzierbar ausgeführt werden kann.

Es war eine zusätzliche Aufgabe der vorliegenden Erfindung, für das anzugebende Verfahren geeignete Betriebsparameter und eine optimierte Verfahrensführung zu identifizieren, mit der sich besonders feste und mechanisch belastbare Ummantelungen erzeugen lassen.

In diesem Zusammenhang war es eine ergänzende Aufgabe der vorliegenden Erfindung, eine Haltevorrichtung und ein zugehöriges System anzugeben, mit dem das entsprechende Verfahren besonders effizient durchgeführt werden kann.

Die Erfinder der vorliegenden Erfindung haben nunmehr gefunden, dass sich die vorstehend beschriebenen Aufgaben überraschenderweise lösen lassen, wenn ausgehend von dem vorstehend beschriebenen Verfahren beim Einsatz von Klebebändern mit einer Klebemasse, welche durch Bestrahlen des Klebebandes mit elektromagnetischer Strahlung ausgehärtet werden kann, wenn die zum Anordnen des mit Klebeband umwickelten Strangs verwendeten Halteelemente einer Halteanordnung so ausgebildet werden, dass sie für elektromagnetische Strahlung der verwendeten Wellenlänge durchlässig sind, wie es in den Ansprüchen definiert ist.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Halteanordnungen, Systeme und geformter Stränge ergeben sich aus den Merkmalen bevorzugter Verfahren.

Die Erfindung betrifft ein Verfahren zur Ummantelung von strangförmigen Elementen, umfassend die Verfahrensschritte:
a) Herstellen oder Bereitstellen eines strangförmigen Elementes,
b) Umwickeln des strangförmigen Elementes mit einem Klebeband zum Erhalt eines umwickelten Strangs, wobei das Klebeband als aushärtbare Klebemasse eine strahlungshärtende und/oder thermisch härtende Klebemasse umfasst, die vorzugsweise gleichzeitig haftklebrig ist,
c) Anordnen des umwickelten Strangs in einem oder mehreren Halteelementen einer Halteanordnung zur Einstellung einer vorbestimmten Form und zum Erhalt eines geformten Strangs, und
d) Aushärten der aushärtbaren Klebemasse im geformten Strang durch Bestrahlen des Klebebandes mit elektromagnetischer Strahlung einer Wellenlänge λ zum Erhalt eines ummantelten Strangs,
   wobei das eine oder die mehreren Halteelemente zumindest abschnittweise für elektromagnetische Strahlung der Wellenlänge λ zumindest teilweise durchlässig sind,
   wobei die Bestrahlung des Klebebandes mit der elektromagnetischen Strahlung der Wellenlänge λ zumindest teilweise durch das eine oder die mehreren Halteelemente hindurch erfolgt.

In dem erfindungsgemäßen Verfahren wird zunächst ein strangförmiges Element hergestellt oder bereitgestellt. Bei einem solchen strangförmigen Element kann es sich beispielsweise um Schläuche oder Kabel handeln, wobei auch ein Bündel von mehreren dieser Teilelemente eingesetzt werden kann. Die Herstellung von strangförmigen Elementen kann dabei beispielsweise durch das Verbinden dieser ebenfalls strangförmigen Teilelemente erfolgen. Das erfindungsgemäße Verfahren ist insbesondere bei der Herstellung von Kabelbäumen durch Ummantelung von Kabelsträngen besonders leistungsfähig. Bevorzugt ist deshalb ein erfindungsgemäßes Verfahren, wobei das strangförmige Element ein oder mehrere Leitungen und/oder Kabel umfasst, wobei das strangförmige Element bevorzugt ein Kabelstrang ist, der eine Vielzahl von Kabeln umfasst, wobei mit dem Verfahren durch Ummantelung des Kabelstrangs ein Teil eines Kabelbaums erhalten wird. Bevorzugt ist auch ein erfindungsgemäßes Verfahren, wobei das strangförmige Element zwei oder mehr strangförmige Teilelemente umfasst, bevorzugt Leitungen und/oder Kabel, wobei die strangförmigen Teilelemente vor dem Umwickeln des strangförmigen Elements bevorzugt untereinander verbunden und/oder relativ zueinander vorfixiert werden, besonders bevorzugt durch den Einsatz von Klemmen und/oder Kabelbindern und/oder Klebeband, ganz besonders bevorzugt durch den Einsatz von Klebeband, oder besonders bevorzugt durch eine mit dem Verfahren zuvor erzeugte Ummantelung.

In Übereinstimmung mit dem fachmännischen Verständnis kann es sich bei dem strangförmigen Element um einen Bestandteil einer größeren Makrostruktur handeln, beispielsweise eines Bestandteils eines größeren Kabelbaums, welcher eine Vielzahl an über Verbindungsbereiche, beispielsweise Gabelungen, verbundenen Bestandteilen umfasst. Hierbei kann die einfache Ummantelung auch von komplexen Strukturen und die leichte Anwendbarkeit auf Teilbereiche als großer Vorteil des erfindungsgemäßen Verfahrens gesehen werden. Bevorzugt ist ein erfindungsgemäßes Verfahren, wobei das strangförmige Element Bestandteil einer Makrostruktur ist, die eine Vielzahl von strangförmigen Einzelelementen umfasst, die innerhalb der Makrostruktur verlaufen, wobei die Makrostruktur eine Vielzahl von miteinander über Verbindungsbereiche verbundenen strangförmigen Bestandteilen umfasst, wobei das Verfahren bevorzugt auch zur Ummantelung der Verbindungsbereiche verwendet wird, und/oder wobei die Makrostruktur bevorzugt mit dem Kabelverlauf in einem Fahrzeug, insbesondere einem Kraftfahrzeug oder einem Flugzeug, korreliert.

Das strangförmige Element wird mit einem Klebeband umwickelt, um dadurch einen umwickelten Strang zu erhalten, in dem das strangförmige Element von dem noch nicht ausgehärteten Klebeband umgeben ist. Der Begriff Klebeband ist für den Fachmann im Bereich der Klebetechnik klar. Im Rahmen der vorliegenden Erfindung bezeichnet der Ausdruck Band alle dünnen, flächigen Gebilde, d.h. Gebilde mit einer überwiegenden Ausdehnung in zwei Dimensionen, insbesondere Folien, Folienabschnitte und Etiketten, bevorzugt Bänder mit ausgedehnter Länge und begrenzter Breite sowie entsprechende Bandabschnitte.

Für das Umwickeln haben die Erfinder dabei eine Wickeltechnik, die in einer besonders robusten Ummantelung resultiert, wobei es insbesondere zielführend ist, den umwickelten Strang in den zu ummantelnden Bereichen vollständig mit Klebeband zu umwickeln, insbesondere in solchen Bereichen, die im späteren Einsatz des ummantelten Elements hohen mechanischen Belastungen ausgesetzt sind. Bevorzugt ist vor diesem Hintergrund ein erfindungsgemäßes Verfahren, wobei das Klebeband beim Umwickeln in Schraubenlinien um das strangförmige Element gelegt wird, wobei das Umwickeln bevorzugt so erfolgt, dass jede nachfolgende Wicklung des Klebebandes zumindest teilweise, bevorzugt zumindest zu 30 % der Fläche, besonders bevorzugt zumindest 40 % der Fläche, ganz besonders bevorzugt zumindest 50 % der Fläche, insbesondere bevorzugt nicht mehr als 80 % der Fläche, auf die vorrangehende Wicklung des Klebebandes appliziert wird, und/oder wobei das strangförmige Element zumindest abschnittsweise im Wesentlichen vollständig mit dem Klebeband umwickelt wird, sodass die Oberfläche des umwickelten Strangs zumindest abschnittsweise im Wesentlichen vollständig durch das Klebeband gebildet wird. In einer alternativen Verfahrensführung wird das strangförmige Element in axialer Richtung von dem Klebeband umhüllt. Die Umwicklung eines strangförmigen Elements mit dem Klebeband erfolgt dabei nicht -wie vorstehend erläutertschraubenlinienförmig, sondern derart, dass beim Umwickeln eine Längsachse des Bandes im Wesentlichen parallel zur Verlaufsrichtung des strangförmigen Elements ausgerichtet ist. Im Querschnitt gesehen liegt das Klebeband dabei in Form einer archimedischen Spirale um das strangförmige Element. Diese Art der Wicklung wird teilweise auch als "Einschlagen des Kabelbaums" bezeichnet.

Um eine möglichst effiziente Umwicklung des strangförmigen Elements mit dem Klebeband zu ermöglichen, schlagen die Erfinder gemäß einer bevorzugten Ausführungsform der Erfindung vor, die aushärtbare Klebemasse als Haftklebemasse auszubilden, um somit ein leichteres Anhaften an dem strangförmigen Element zu erreichen. Bevorzugt ist entsprechend ein erfindungsgemäßes Verfahren, wobei die aushärtbare Klebemasse eine Haftklebemasse ist.

Eine Haftklebemasse ist dabei in Übereinstimmung mit dem fachmännischen Verständnis eine Klebemasse, die über haftklebrige Eigenschaften verfügt, d.h. über die Eigenschaft bereits unter relativ schwachem Andruck eine dauerhafte Verbindung zu einem Haftgrund einzugehen. Entsprechende Haftklebebänder sind üblicherweise nach Gebrauch im Wesentlichen rückstandsfrei vom Haftgrund wieder ablösbar und in der Regel schon bei Raumtemperatur permanent eigenklebrig, was bedeutet, dass sie eine gewisse Viskosität und Anfassklebrigkeit aufweisen, sodass sie die Oberfläche eines Untergrunds bereits bei geringem Andruck benetzen. Die Haftklebrigkeit eines Haftklebebandes ergibt sich daraus, dass als Klebemasse eine Haftklebemasse verwendet wird. Ohne an diese Theorie gebunden sein zu wollen, wird häufig davon ausgegangen, dass eine Haftklebemasse als extrem hochviskose Flüssigkeit mit einem elastischen Anteil betrachtet werden kann, die demzufolge charakteristische viskoelastische Eigenschaften aufweist, die zu der vorstehend beschriebenen dauerhaften Eigenklebrigkeit und Haftklebefähigkeit führen. Man geht davon aus, dass es bei entsprechenden Haftklebemassen bei mechanischer Deformation sowohl zu viskosen Fließprozessen als auch zum Aufbau elastischer Rückstellkräfte kommt. Der anteilige viskose Fluss dient dabei zur Erzielung von Adhäsion, während die anteiligen elastischen Rückstellkräfte insbesondere zur Erzielung von Kohäsion notwendig sind. Die Zusammenhänge zwischen der Rheologie und der Haftklebrigkeit sind im Stand der Technik bekannt und beispielsweise in "Satas, Handbook of Pressure Sensitive Adhesives Technology", Third Edition, (1999), Seiten 153 bis 203, beschrieben. Zur Charakterisierung des Maßes an elastischem und viskosem Anteil werden üblicherweise der Speichermodul (G`) und der Verlustmodul (G") herangezogen, die mittels dynamisch mechanischer Analyse (DMA), beispielsweise unter Verwendung eines Rheometers, ermittelt werden können, wie es beispielsweise in der WO 2015/189323 offenbart wird. Im Rahmen der vorliegenden Erfindung wird eine Klebemasse vorzugsweise dann als haftklebrig und somit als Haftklebemasse verstanden, wenn bei einer Temperatur von 23 °C im Deformationsfrequenzbereich von 10° bis 10¹ rad/sec G' und G" jeweils zumindest zum Teil im Bereich von 10³ bis 10⁷ Pa liegen.

Unabhängig von einer etwaigen Haftklebrigkeit ist das für das erfindungsgemäße Verfahren wesentlich, dass das Klebeband eine aushärtbare Klebemasse umfasst. Durch die Möglichkeit zur Härtung fungiert die Klebemasse als Strukturklebstoff (vgl. Römpp, Georg Thieme Verlag, Dokumentkennung RD-19-04489, letzte Aktualisierung: September 2012). Nach DIN EN 923: 2006-01 sind Strukturklebstoffe Klebstoffe, die Klebverbindungen bilden, die in einem Gefüge für eine vorgegebene längere Zeitspanne eine festgelegte Festigkeit beibehalten können (nach ASTM-Definition: "bonding agents used for transferring required loads between adherends exposed to service environments typical forthe structure involved"). Es sind also Klebstoffe für chemisch und physikalisch hoch beanspruchbare Klebungen, die im ausgehärteten Zustand zur Verfestigung der Klebebänder beitragen.

Im erfindungsgemäßen Verfahren muss die aushärtbare Klebemasse strahlungshärtend und/oder thermisch härtend sein. In Verfahrensschritt d) erfolgt das Aushärten der aushärtbaren Klebemasse nämlich durch das Bestrahlen des Klebebandes bzw. der im Klebeband enthaltenen aushärtbaren Klebemasse mit elektromagnetischer Strahlung einer Wellenlänge λ. Eine strahlungshärtende Klebemasse ermöglicht dabei eine unmittelbare Aushärtung infolge des Einwirkens elektromagnetischer Strahlung. Die thermisch härtende Klebemasse wird im erfindungsgemäßen Verfahren hingegen mittelbar durch die Einwirkung von elektromagnetischer Strahlung ausgehärtet, indem diese ein Temperaturerhöhung in der Klebemasse oder umliegenden Teilen des Klebebandes induziert, die dann zum Aushärten führt. Hierbei ist es grundsätzlich möglich, dass die eingesetzte aushärtbare Klebemasse sowohl unmittelbar strahlungshärtend als auch thermisch härtend sein kann.

Entsprechende strahlungshärtende und/oder thermisch härtende Klebemassen sind dem Fachmann aus dem Stand der Technik ebenso bekannt, wie die zum Aushärten jeweils eingesetzten Bedingungen. Bevorzugte aushärtbare Klebemassen werden zudem nachfolgend offenbart.

Der mit Klebeband umwickelte Strang wird in eine vorbestimmte Form gebracht. Die vorbestimmte Form kann beispielsweise durch einen Kabelsatzplan vorgegeben sein. Diese Ausformung erfolgt im erfindungsgemäßen Verfahren durch den Einsatz von einem oder mehreren Halteelementen, die Teil einer Halteanordnung sind. In Übereinstimmung mit dem fachmännischen Verständnis sind die Halteelemente die Teile der Halteanordnung, die mit dem umwickelten Strang in Kontakt stehen. Durch die Anordnung der Halteelemente im Raum wird der umwickelte Strang, welcher in diesen Halteelementen angeordnet wird, in die gewünschte Form gebracht. Es ist für den Fachmann ersichtlich, dass die Verfahrensschritte b) und c) hierbei gegebenenfalls auch kombiniert werden können, beispielsweise indem das strangförmige Element bereits vor dem Umwickeln mit dem Klebeband in den Halteelementen der Halteanordnung angeordnet wird und das Umwickeln abschnittsweise dadurch erfolgt, dass das strangförmige Element beispielsweise teilweise aus den Halteelementen herausgehoben wird. Für bestimmte Verfahrensführungen bevorzugt ist deshalb ein erfindungsgemäßes Verfahren, wobei das strangförmige Element beim Umwickeln zumindest teilweise in der Halteanordnung angeordnet ist.

In Verfahrensschritt d) erfolgt nun das Aushärten der aushärtbaren Klebemasse im wie vorstehend beschrieben geformten Strang. Dies erfolgt in dem erfindungsgemäßen Verfahren ursächlich durch das Bestrahlen des Klebebandes mit elektromagnetischer Strahlung, wobei diese elektromagnetische Strahlung eine spezifische Wellenlänge λ aufweist. Für den Fachmann ist klar, dass beispielsweise ein chemisches Härten, welches bei Tageslicht (welches ebenfalls elektromagnetische Strahlung darstellt) erfolgt, kein Aushärten im Sinne des erfindungsgemäßen Verfahrens ist, da das Aushärten in diesem Fall nicht ursächlich durch die elektromagnetische Strahlung erfolgt.

In Übereinstimmung mit dem fachmännischen Verständnis muss die eingesetzte elektromagnetische Strahlung nicht monochromatisch sein, d. h. im Spektrum lediglich über eine Wellenlänge verfügen. In der Praxis wird die eingesetzte Strahlung vielmehr ein Spektrum verschiedener Wellenlängen umfassen. Der Fachmann wählt die Wellenlänge der elektromagnetischen Strahlung in Abhängigkeit von der eingesetzten Klebemasse aus, wobei er die notwendigen Informationen beispielsweise tabellierten Werken oder den Herstellerangaben zu den eingesetzten Materialien, beispielsweise den Photoinitiatoren, entnehmen kann. Mit Blick auf eine möglichst zeit- und kosteneffiziente Verfahrensführung ist es für die überwiegende Zahl der praxisrelevanten Fälle vorteilhaft, wenn die zur Aushärtung verwendete elektromagnetische Strahlung der Wellenlänge λ bei Einsatz von elektromagnetischer Strahlung mit einem Spektrum an Wellenlängen, die Wellenlänge mit der höchsten Intensität im Strahlungsspektrum ist oder wenigstens im Strahlungsspektrum zumindest 50 %, bevorzugt zumindest 70 %, besonders bevorzugt zumindest 90 %, der maximalen Intensität aufweist.

In dem erfindungsgemäßen Verfahren wird eine spezifische Art von Halteelementen eingesetzt. Diese Halteelemente, d. h. die mit dem geformten Strang in Kontakt stehenden Teile der Halteanordnung, sind zumindest abschnittsweise für elektromagnetische Strahlung der entsprechenden Wellenlänge λ zumindest teilweise durchlässig. Auch wenn es bevorzugt ist, wenn sämtliche Halteelemente der Halteanordnung in dieser Weise ausgebildet sind, versteht der Fachmann, dass neben den erfindungsgemäß vorzusehenden Halteelementen auch weitere Halteelemente vorgesehen werden können, die gemäß dem Stand der Technik ausgebildet sind.

Der Ausdruck "zumindest abschnittsweise" bedeutet, dass die Halteelemente nicht über die gesamten Abmessungen für elektromagnetische Strahlung der entsprechenden Wellenlänge durchlässig sein müssen. Insbesondere können die entsprechenden Halteelemente dünne Bereiche umfassen, die nicht für elektromagnetische Strahlung durchlässig sind, wobei die Aushärtung in diesem Fall durch eine Reaktionswanderung der Aushärtung in diese möglichst schmalen Bereiche erfolgt. Zusätzlich oder alternativ können jedoch auch gezielt größere Strukturen vorgesehen sein, die der bewussten Abschirmung von Teilbereichen des geformten Stranges durch die Halteelemente dienen, um so beispielsweise eine gezielte Flexibilität in der Ummantelung, wie sie durch ein abschnittsweise nicht ausgehärtetes Klebeband erreicht werden kann, einzustellen.

Der Ausdruck "zumindest teilweise durchlässig" bedeutet in Übereinstimmung mit dem fachmännischen Verständnis, dass ein Teil der auf das Halteelement auftreffenden elektromagnetischen Strahlung der Wellenlänge λ durch das Halteelement hindurchtreten kann, sei es durch eine Öffnung oder durch den Einsatz eines für die entsprechende Wellenlänge zumindest teilweise transparentes Materials, wobei letzteres klar bevorzugt ist. Hierbei versteht der Fachmann, dass selbst Materialien, die für elektromagnetischen Strahlung der Wellenlänge λ weitgehend transparent sind, für entsprechende Strahlung häufig trotzdem eine kleine Absorption zeigen, sodass diese streng genommen für die elektromagnetische Strahlung entsprechender Wellenlänge lediglich teilweise durchlässig sind. Dies wird auch nachfolgend weiter erläutert.

Um sicherzustellen, dass die Vorteile des erfindungsgemäßen Verfahrens, welche durch den Einsatz der für die elektromagnetische Strahlung teilweise durchlässigen Halteelemente erreicht wird, im erfindungsgemäßen Verfahren auch zum Tragen kommen, wird definiert, dass das Bestrahlen des Klebebands im geformten Strang tatsächlich durch die entsprechend ausgebildeten Halteelemente hindurch erfolgen muss. Der Ausdruck "zumindest teilweise" bedeutet insoweit in Übereinstimmung mit dem fachmännischen Verständnis, dass beispielsweise auch Bereiche des geformten Strangs bestrahlt werden können erfolgt, die nicht in einem Halteelement angeordnet sind, sondern beispielsweise zwischen zwei Halteelementen verlaufen.

Der entsprechende ummantelte Strang, indem die aushärtebare Klebemasse ausgehärtet wurde, kann am Ende des erfindungsgemäßen Verfahrens leicht der Halteanordnung entnommen werden.

Mit dem erfindungsgemäßen Verfahren werden in zeit- und kosteneffizienter Weise strangförmige Elemente mit einer hochleistungsfähigen Ummantelung erhalten, die über ausgezeichnete mechanische Eigenschaften verfügt. Durch die für die relevante Strahlung transparent ausgebildeten Halteelemente ist es in vorteilhafter Weise möglich, präzise die gewünschte Form des strangförmigen Elements einzustellen, ohne dass Aushärten der aushärtbaren Klebemasse durch Bestrahlen mit elektromagnetischer Strahlung zu stark zu behindern. Hierdurch kann auch bei strahlungsbasierter Härtung eine große Vielzahl an Halteelementen eingesetzt werden, wodurch eine besonders präzise Strangführung möglich wird, ohne Aushärtungsfehler durch ungewünschte Überdeckungen des geformten Stranges durch die Halteelemente zu bedingen.

Durch den Einsatz entsprechender Halteelemente ist es vorteilhafterweise möglich, das Klebeband beim Ausformen eng an das zu ummantelnde Element anzupressen und somit einen besonders dichten Verbund aus Ummantelung und strangförmigen Element zu schaffen. Zudem ist es durch die potenziell hohe Zahl an Halteelementen in der Halteanordnung möglich, auch unerfahrenen Arbeitskräften eine zuverlässige Anordnung des umwickelten Strangs in den Halteelementen und damit eine präzise Ausformung des geformten Stranges zu ermöglichen, wobei dabei in vorteilhafter Weise auch komplexe Makrostrukturen realisiert werden können.

Nach Einschätzung der Erfinder ist es für bestimmte Anwendungen vorteilhaft, wenn eine thermisch härtbare Klebemasse eingesetzt wird. Bei Einsatz einer entsprechenden thermisch härtbaren Klebemasse erfolgt das Aushärten in Verfahrensschritt d) derart, dass durch die elektromagnetische Strahlung der Wellenlänge λ Energie in das Klebeband bzw. die Klebemasse eingetragen wird, die dort zu einer Temperaturerhöhung führt. Zielführenderweise wird nach Einschätzung der Erfinder hierfür elektromagnetische Strahlung im infraroten Bereich eingesetzt, wie sie beispielsweise von Infrarotstrahlern bereitgestellt werden kann. Diese Verfahrensführung schließt dabei nicht aus, dass es darüber hinaus auch zu einem anderen Wärmeeintrag in das System kommt, beispielsweise durch Kontaktwäre oder eine separate Heizeinrichtung. Bevorzugt ist somit ein erfindungsgemäßes Verfahren, wobei das Klebeband als aushärtbare Klebemasse eine thermisch härtbare Klebemasse umfasst, wobei die thermisch härtbare Klebemasse bevorzugt dazu eingerichtet ist, dass die thermische Aushärtung durch elektromagnetische Strahlung im infraroten Bereich, besonders bevorzugt elektromagnetische Strahlung mit einer Wellenlänge im Bereich von 780 nm bis 1 mm, ganz besonders bevorzugt im Bereich von 780 nm bis 50 µm, insbesondere bevorzugt im Bereich von 780 nm bis 3 µm, befördert und/oder bewirkt, bevorzugt bewirkt, werden kann.

Thermisch aushärtbare Klebemassen sind aus dem Stand der Technik bekannt, beispielsweise aus der WO 2017109011 A1, der WO2021018766 A1 oder der EP 3693429 A1. In entsprechenden thermisch härtbaren Klebebändern wird dabei neben der thermisch härtbaren Klebemasse teilweise auch eine separate Haftklebemasse vorgesehen, durch welche die haftklebrigen Eigenschaften realisiert werden. Typische thermisch härtbare Klebemassen können beispielsweise Epoxidharze und thermoplastische Polymere in Verbindung mit einem geeigneten Härter und Beschleunigersystem umfassen. Um eine möglichst gute Aushärtbarkeit durch elektromagnetische Strahlung zu gewährleisten kann es hierbei sinnvoll sein, den entsprechenden Klebemassen Additive zuzusetzen, mit denen die Absorptionseigenschaften im entsprechenden Wellenlängenbereich gesteigert werden, um einen guten Energieeintrag in das System zu ermöglichen. Beispielsweise können thermisch aushärtbare Klebemassen eingesetzt werden, welche bei einer Temperatur im Bereich von 60 bis 160°C, vorzugsweise im Bereich von 60 bis 110°C, besonders bevorzugt im Bereich von 60 bis 100 °C, thermisch härtbar sind.

Insbesondere wegen der Unmittelbarkeit der Aushärtung durch Applikation von elektromagnetischer Strahlung und der präzisen Einstellbarkeit der benötigten Wellenlänge über die eingesetzten Initiatorsysteme ist der Einsatz von strahlungshärtenden Klebemassen, bevorzugt von überwiegend strahlungshärtenden Klebemassen, besonders bevorzugt von im Wesentlichen vollständig strahlungshärtenden Klebemassen, für im Wesentlichen alle Anwendungen explizit bevorzugt. Hierbei kommt insbesondere den UV-härtbaren Klebemassen eine besondere Bedeutung zu, da diese einen besonders leistungsstarken Energieeintrag in das Klebeband und eine effiziente Härtung ermöglichen und eine große Vielzahl an geeigneten Photoinitiatoren verfügbar sind. Besonders bevorzugt ist somit ein erfindungsgemäßes Verfahren, wobei das Klebeband als aushärtbare Klebemasse eine strahlungshärtende Klebemasse umfasst, wobei die strahlungshärtende Klebemasse bevorzugt eine UV-härtbare Klebemasse ist, wobei die UV-härtbare Klebemasse besonders bevorzugt durch Bestrahlung mit elektromagnetischer Strahlung mit einer Wellenlänge im Bereich von 10 bis 380 nm, ganz besonders bevorzugt im Bereich von 200 bis 380 nm, aushärtbar ist.

Strahlungshärtende Klebemassen sind aus dem Stand der Technik bekannt, beispielsweise aus der EP3693433 A1 und dem darin gewürdigten Stand der Technik. Eine bevorzugte strahlungshärtende Klebemasse umfasst beispielsweise 15 bis 50 Gewichtsteile, bevorzugt 20 bis 40 Gewichtsteile, Matrixpolymer und 50 bis 85 Gewichtsteile, bevorzugt 60 bis 75 Gewichtsteile, Epoxidharz sowie 0,1 bis 3 Gewichtsteile Photoinitiator, ggf. in Verbindung mit einem Photosensitizer, wobei das Matrixpolymer einen selbsttragenden Film bildet, in dem Epoxidharz und Photoinitiator eingebettet sind.

Bevorzugt ist das Matrixpolymer ausgewählt aus der Gruppe bestehend aus Styrol-Copolymeren, Acrylat-Copolymeren, Methacrylat-Copolymeren, thermoplastischen Polyurethanen, Copolyestern, Copolyamiden und Ethylen-Vinylacetat-Copolymeren und Mischungen dieser Polymere.

Als Epoxidharz(e) für solche Klebemassen kann ein einziges Epoxidharz oder eine Mischung von Epoxidharzen eingesetzt werden. Grundsätzlich können bei Raumtemperatur flüssige Epoxidharze oder bei Raumtemperatur feste Epoxidharze oder Mischungen hiervon eingesetzt werden. Beispiele sind 3,4-Epoxycyclohexylmethyl-3',4'-epoxycyclohexancarboxylat (EEC), Dicyclopentadiendioxid, 3-Ethyl-3-oxetanmethanol, Tetrahydrophthalsäurediglycidyl-ester, Hexahydrophthalsäurediglycidylester, 1,2-Ethandiglycidylether, 1,3-Propandiglycidylether, 1,4-Butandioldiglycidyl-ether, höhere 1,n-Alkandiglycidylether, Bis-[(3,4-epoxycyclohexyl)methyl]adipat, Vinylcyclohexyldioxid, 1,4-Cyclohexandimethanol-bis-(3,4-epoxycyclohexancarboxylat), 4,5-Epoxytetrahydrophthalsäurediglycidylester, Bis-[1-ethyl(3-oxetanyl)methyl)ether, Pentaerythritoltetraglycidylether, sowie die entsprechenden Derivate, und Bisphenol-A-Digylcidylether (DGEBA), hydriertes Bisphenol-A-Diglycidyl-ether, Bisphenol-F-Diglycidylether, hydriertes Bisphenol-F-Diglycidylether, Epoxyphenol-Novolaks, hydrierte Epoxyphenol-Novolak, Epoxycresol-Novolaks, hydrierte Epoxycresol-Novolaks, 2-(7-Oxabicyclo[4.1.0]hept-3-yl;Spiro[1 ,3-dioxane-5,3'-[7]oxabicyclo[4.1.0]-heptane] und 1,4-Bis((2,3-epoxypropoxy)-methyl)cyclohexane.

Als Photoinitiator für die kationische Härtung der Epoxidharze sind beispielsweise Sulfonium, lodonium und Metallocen basierende Systeme einsetzbar. Sulfonium basierende Kationen sind beispielsweise in der US 6908722 B1 offenbart. Beispiele für geeignete Anionen, die als Gegenionen für die oben genannten Kationen dienen können, sind Tetrafluorborat, Tetraphenylborat, Hexafluorphosphat, Perchlorat, Tetrachlorferrat, Hexafluorarsenat, Hexafluorantimonat, Pentafluorhydroxyantimonat, Hexachlorantimonat, Tetrakispentafluorphenylborat, Tetrakis(pentafluormethylphenyl)borat, Bi-(trifluormethylsulfonyl)amid und Tris-(trifluormethylsulfonyl)methid genannt. Ferner sind insbesondere für lodonium-basierende Initiatoren auch Chlorid, Bromid oder lodid als Anionen denkbar, wobei aber Initiatoren, die im Wesentlichen frei von Chlor und Brom sind, bevorzugt sind.

Optional können Photosensitizer eingesetzt werden, die in einem Redox-Prozess den Photoinitiator reduzieren. In diesem Prozess wird der eigentliche Photoinitiator zersetzt, wobei reaktive Kationen gebildet werden, die eine kationische Polymerisation starten können. Diese Art der Reaktionsführung erlaubt die Initiation der kationischen Polymerisation bei höheren Wellenlängen. Beispiele für solche Photosensitizer sind Diphenolmethanon und Derivate, Acetophenonderivate, Anthracenderivate wie 2-Ethyl-9,10-Dimethoxy-Anthracen und 9-Hydroxymethyl-Anthracen, Phenylketonderivate wie 1-Hydroxycyclohexyl-phenylketon, 2-Hydroxy-2-methyl-1-phenyl-propan-1-one und 4-(2-Hydroxyethoxy)-phenyl-(2-hydroxy-2-methylpropyl)keton sowie Thioxanthenon-derivate wie 4-Isopropyl-9-thioxanthenon oder 1-chloro-4-propoxy-thioxanthenon.

Mit Blick auf die Handhabungseigenschaften des eingesetzten Klebebandes ist es bevorzugt, wenn das Klebeband einen Träger umfasst. Um zu mechanisch belastbaren Ummantelungen zu gelangen, ist es dabei vorteilhaft, wenn der Träger aus einem porösen Material ausgebildet wird, in das die aushärtbare Klebemasse zumindest teilweise einsickern kann, sodass der Aushärtungsprozess auch zu einer Versteifung der Trägerschicht führt. Bevorzugt ist somit ein erfindungsgemäßes Verfahren, wobei das Klebeband einen vorzugsweise strangförmigen Träger umfasst, wobei die aushärtbare Klebemasse zumindest teilweise auf der Oberfläche des Trägers angeordnet ist.

Die Klebemasse kann in Längsrichtung des Klebebands in Form eines Streifens aufgebracht sein, der eine geringere Breite aufweist als der erste Träger.

Je nach Verwendungsfall können auch mehrere parallele Streifen des Klebers auf dem Träger beschichtet sein. Die Lage des Streifens auf dem Träger ist frei wählbar, wobei eine Anordnung direkt an einer der Kanten des Trägers bevorzugt wird. Bevorzugt ist die Klebemasse vollflächig auf dem Träger aufgetragen.

Bevorzugt ist dabei ein erfindungsgemäßes Verfahren, wobei der Träger ein poröses Trägermaterial umfasst, bevorzugt ein Polyestervlies, wobei die aushärtbare Klebemasse bevorzugt zumindest teilweise im porösen Trägermaterial angeordnet ist, bevorzugt zu mehr als 10 %, besonders bevorzugt zu mehr als 30 %, ganz besonders bevorzugt zu mehr als 50 %, bezogen auf die Masse der aushärtbaren Klebemasse.

Der aus handhabungstechnischer Sicht vorteilhafte Einsatz eines Trägers kann jedoch mit Blick auf die strahlungsbasierte Aushärtung der Klebemasse nachteilig sein, nämlich dann, wenn der Träger die dem strangförmigen Element zugewandte Klebemasse zu stark gegen die elektromagnetische Strahlung abschirmt. Dies gilt insbesondere dann, wenn das Klebeband beim Umwickeln überlappend angeordnet wird, sodass in Teilbereichen der noch nicht ausgehärteten Ummantelung mehrere Lagen an Trägermaterial übereinander liegen. Die Erfinder schlagen insoweit vor, dass das Trägermaterial auf die eingesetzte elektromagnetische Strahlung bzw. den Aushärtungsmechanismus abgestimmt werden sollte. Insbesondere bei Einsatz von strahlungshärtenden Klebemassen ist es zielführend, wenn das Trägermaterial für die entsprechende Wellenlänge durchlässig ist, beispielsweise, weil es durchgehende Ausnehmungen aufweist und/oder bevorzugt aus einem Material ausgebildet ist, welches für die entsprechende Wellenlänge eine geringe Absorption zeigt. Beim Einsatz von thermisch härtbaren Klebemassen, die mittelbar über den Energieeintrag der elektromagnetischen Strahlung in das Klebeband und die damit verbundene Temperaturerhöhung ausgehärtet werden, hat es sich hingegen als alternative Ausgestaltung erwiesen, das Trägermaterial beispielsweise durch Einfärbung so auszugestalten, dass es die entsprechende elektromagnetische Strahlung besonders weitgehend absorbiert und sich entsprechend besonders leicht mittels elektromagnetischer Strahlung aufheizen lässt. Bevorzugt ist folglich ein erfindungsgemäßes Verfahren, wobei der Träger zumindest abschnittsweise ein Trägermaterial umfasst, das für elektromagnetische Strahlung der Wellenlänge λ zumindest teilweise, bevorzugt im Wesentlichen vollständig, durchlässig ist, oder wobei der Träger zumindest abschnittsweise ein Trägermaterial umfasst, das elektromagnetische Strahlung der Wellenlänge λ, bevorzugt elektromagnetische Strahlung im infraroten Bereich, zumindest teilweise, bevorzugt im Wesentlichen vollständig, absorbiert, um eine strahlungsbasierte Erwärmung des Klebebandes zu bewirken und/oder zu befördern.

Bevorzugt liegt das Flächengewicht des Trägers im Bereich von 30 bis 300 g/m², bevorzugt 50 bis 200 g/m², besonders bevorzugt 50 bis 150 g/m², ganz besonders bevorzugt 70 bis 130 g/m². Bevorzugt liegt der Masseauftrag der auf dem Träger aufgebrachten und/oder in den Träger eingebrachten aushärtbaren Klebemasse im Bereich von 50 bis 500 g/m², bevorzugt 100 bis 250 g/m², besonders bevorzugt 100 bis 200 g/m².

Gemäß einer besonders bevorzugten Ausführungsform der Erfindung umfasst, vorzugsweise besteht das Klebeband aus einem Träger, auf den vollflächig die aushärtbare Klebemasse in Form einer strahlungshärtenden und/oder thermisch härtenden Klebemasse aufgebracht ist, die gleichzeitig haftklebrig ist.

Wie vorstehend erläutert, zeigen sich die Vorteile des erfindungsgemäßen Verfahrens besonders ausgeprägt für solche aushärtbaren Klebemassen, die eine geringe Reaktionswanderung zeigen, d. h. bei denen die durch Bestrahlung an einem bestimmten Punkt bewirkte Aushärtung sich nicht oder nur unwesentlich durch die Klebemasse hindurch fortsetzt, da diese Klebemassen bei Einsatz herkömmlicher Halteelemente besonders zur Ausbildung von Materialfehlern neigen, die auf eine unvollständige Härtung zurückzuführen sind. Solche Klebemassen sind jedoch regelmäßig besonders gut verfügbar und/oder einfach und kosteneffizient herzustellen. Bevorzugt ist vor diesem Hintergrund für bestimmte Anwendungen entsprechend ein erfindungsgemäßes Verfahren, wobei die aushärtbare Klebemasse eine geringe Reaktionswanderung zeigt, so dass sich die durch Bestrahlung mit elektromagnetischer Strahlung der Wellenlänge λ an einem Punkt P bewirkte Aushärtung bei 23 °C innerhalb von 24 h um weniger als 10 mm, bevorzugt weniger als 5 mm, besonders bevorzugt weniger als 1 mm, in umliegende Bereiche erstreckt, die nicht mit elektromagnetischer Strahlung der Wellenlänge λ bestrahlt wurden.

Prinzipiell kann die Anbringung der Halteelemente in der Halteanordnung auf vielen verschiedenen Wegen erfolgen, wobei insbesondere bei Anwendung des erfindungsgemäßen Verfahrens für eine große Zahl von gleichartigen strangförmigen Elementen auch eine dauerhafte Verbindung zielführend sein kann. Nach Einschätzung der Erfinder ist es jedoch für die weit überwiegende Zahl der Anwendungen bevorzugt, wenn sich die teilweise strahlungsdurchlässigen Halteelemente reversibel und zerstörungsfrei von der Halteanordnung lösen lassen, wobei diese dann über sogenannte Trägerelemente mit der Halteanordnung verbunden sind. Beispielsweise kann eine derart bevorzugte Ausgestaltung als Halteelemente eine Vielzahl von strahlungsdurchlässigen Auflagen umfassen, die an den Enden von strebenförmigen Trägerelementen befestigt werden und dadurch die Aufnahme für den umwickelten Strang ausbilden. Bevorzugt ist deshalb ein erfindungsgemäßes Verfahren, wobei das eine oder die mehreren Halteelemente die für die Aufnahme des umwickelten Strangs vorgesehenen Aufnahmebereiche von einem oder mehreren Trägerelementen der Halteanordnung sind, wobei die Halteelemente und/oder die Trägerelemente bevorzugt reversibel und zerstörungsfrei lösbar mit der Halteanordnung verbunden sind.

Der Fachmann versteht, dass sich mit dem erfindungsgemäßen Verfahren gegenüber dem Stand der Technik bereits dann Vorteile erreichen lassen, wenn die Halteelemente zumindest in einem Teil der Halteanordnung jeweils zumindest abschnittsweise für elektromagnetische Strahlung der spezifischen Wellenlänge zumindest teilweise durchlässig sind. Gleichzeitig ist dem Fachmann im Lichte der vorstehenden Ausführungen jedoch klar, dass die Verfahrensführung umso effizienter erfolgen kann, umso mehr elektromagnetische Strahlung auf das Klebeband des geformten Stranges auftreffen kann. Entsprechend ist es besonders bevorzugt, wenn die Halteelemente im Wesentlichen über ihre gesamten Abmessungen hinweg zumindest teilweise durchlässig sind, wobei es zusätzlich oder alternativ besonders bevorzugt ist, dass die durchlässigen Teile der Halteelemente elektromagnetische Strahlung der spezifischen Wellenlänge besonders effizient durchlassen. Bevorzugt ist vor diesem Hintergrund ein erfindungsgemäßes Verfahren, wobei das eine oder die mehreren Halteelemente über die gesamte Länge für elektromagnetische Strahlung der Wellenlänge λ zumindest teilweise durchlässig ist, und/oder wobei das eine oder die mehreren Halteelemente zumindest abschnittweise zu 30 % oder mehr, bevorzugt zu 50 % oder mehr, besonders bevorzugt zu 70 % oder mehr, besonders bevorzugt zu 90 % oder mehr, ganz besonders bevorzugt zu 95 % oder mehr, für elektromagnetische Strahlung der Wellenlänge λ durchlässig sind, bezogen auf das Verhältnis der Gesamtintensität der auf das Halteelement eingestrahlten elektromagnetischen Strahlung der Wellenlänge λ im Verhältnis zu der Gesamtintensität der durch das Halteelement durchtretenden elektromagnetischen Strahlung der Wellenlänge λ.

Eine für das erfindungsgemäße Verfahren geeignete Ausgestaltung der Halteelemente lässt sich grundsätzlich dadurch erreichen, dass die Halteelemente mit durchgehenden Ausnehmungen versehen werden, wie es beispielsweise in einem Gitter oder einer Strebenstruktur der Fall ist, sodass das Bestrahlen durch die Gitteröffnungen bzw. die Freiräume zwischen den Streben erfolgen kann. Entsprechende Halteelemente sind regelmäßig besonders leicht zu fertigen und insbesondere hinsichtlich der Materialauswahl sehr flexibel. Insbesondere lassen sich entsprechende Halteelemente, die nicht auf eine Transparenz der verwendeten Materialien angewiesen sind, durch den Einsatz von Metallen besonders haltbar ausgestalten. Zudem können entsprechende Halteelemente mit zumeist nicht transparenten Anti-Haft-Beschichtung, beispielsweise mit Polytetrafluorethylen (PTFE), versehen werden, sodass sich der ausgehärtete Strang insbesondere auch beim Einsatz von trägerlosen Klebebändern anschließend leicht aus den Halteelementen herausnehmen lässt. Bevorzugt ist demgemäß ein erfindungsgemäßes Verfahren, wobei das eine oder die mehreren Halteelemente zumindest abschnittweise, bevorzugt im Wesentlichen über die gesamte Länge der Halteelemente, eine Gitterstruktur aufweist und/oder eine Vielzahl senkrechten Streben aufweist, wobei das Bestrahlen mit der elektromagnetischen Strahlung zumindest teilweise durch in der Gitterstruktur und/oder zwischen den Streben vorhandenen Ausnehmungen hindurch erfolgt, wobei die Gitterstruktur und/oder die Streben bevorzugt eine mittlere Dicke von weniger als 10 mm, bevorzugt weniger als 5 mm, besonders bevorzugt weniger als 2 mm, aufweisen, wobei das eine oder die mehreren Halteelemente bevorzugt herstellbar sind durch 3D-Druck, Fräsen oder durch Tiefziehen von Streckblechen, besonders bevorzugt herstellbar sind durch 3D-Druck.

Gegenüber der vorstehend beschriebenen Ausführungsform ist es nach Einschätzung der Erfinder jedoch ganz besonders bevorzugt, wenn die Durchlässigkeit des Halteelements nicht bzw. nicht ausschließlich durch eine Strukturierung erzeugt wird, sondern wenn hingegen eine geeignete Materialauswahl getroffen wird, die die Durchlässigkeit für entsprechende elektromagnetische Strahlung der Wellenlänge λ erzeugt. Eine entsprechende Ausgestaltung ermöglicht es, den geformten Strang großflächig mit den Halteelementen zu umgeben und dabei abschnittsweise von der Umwelt abzuschirmen, ohne dass die Aushärtung mittels Bestrahlung nachteilig beeinflusst wird. Bevorzugt ist ein erfindungsgemäßes Verfahren, wobei das eine oder die mehreren Halteelemente zumindest abschnittweise, bevorzugt zu 50 % oder mehr, besonders bevorzugt zu 70 % oder mehr, ganze besonders bevorzugt zu 90 % oder mehr, insbesondere bevorzugt im Wesentlichen vollständig, aus einem Material ausgebildet sind, welches für elektromagnetische Strahlung der Wellenlänge λ zumindest teilweise durchlässig ist, wobei das Material für elektromagnetische Strahlung der Wellenlänge λ bevorzugt einen Absorptionskoeffizienten α von 1,0 1/cm oder weniger, bevorzugt von 0,7 1/cm oder weniger, besonders bevorzugt von 0,4 1/cm oder weniger, ganz besonders bevorzugt von 0,2 1/cm oder weniger, aufweist.

Geeignete Materialien kann der Fachmann dabei zwanglos in Abhängigkeit von der eingesetzten Wellenlänge identifizieren und beispielsweise auf tabellierte Absorptionskoeffizienten zurückgreifen. Am Beispiel von UV-härtbaren Haftklebemassen, welche unter Einwirkung einer von elektromagnetischer Strahlung einer Wellenlänge λ im ultravioletten Bereich ausgehärtet werden, können beispielhafte Materialien angegeben werden. Bevorzugt ist in diesem Fall nämlich ein erfindungsgemäßes Verfahren, wobei das eine oder die mehreren Halteelemente zumindest abschnittweise, bevorzugt zu 50 % oder mehr, besonders bevorzugt zu 70 % oder mehr, ganze besonders bevorzugt zu 90 % oder mehr, insbesondere bevorzugt im Wesentlichen vollständig, aus einem Material ausgebildet sind, das ausgewählt ist aus der Gruppe bestehend aus Polymethylmethacrylat, amorphen Polyethylenterephthalat und mit Glykol modifiziertes Polyethylenterephthalat, wobei das eine oder die mehreren Halteelemente bevorzugt herstellbar sind durch Umformverfahren, besonders bevorzugt Thermoformen.

Insbesondere bei Einsatz von für elektromagnetische Strahlung der Wellenlänge λ durchlässigen Materialien schlagen die Erfinder vor, dass die Halteelemente eine Aufnahme aufweisen können, die an den Querschnitt des geplanten ummantelten Strangs angepasst wird, um die Querschnittsform des herzustellenden ummantelten Strangs während des Aushärtungsprozesses besonders effizient stabilisieren zu können und zudem eine enge Packung des Stranges in den Halteelementen zu ermöglichen, sodass das eingesetzten Klebeband besonders dicht an dem zu ummantelten strangförmigen Elementen anliegt. Auch wenn es hierbei möglich ist, beispielsweise rechteckige Querschnitte beispielsweise durch ein Halteelement mit U-Profil, vorzusehen, ist es mit Blick auf die regelmäßig annähernd kreisförmigen Querschnitte üblicher Kabelbäume und die damit mögliche volumenoptimierte Anordnung der Kabel regelmäßig zielführend, teilkreisförmige Aufnahmen vorzusehen, d.h. eine gerundete Aufnahme. Hierbei ist insbesondere ein halbkreisförmiger Querschnitt der Aufnahmen einen guten Kompromiss zwischen einer leichten Einbringung des umwickelten Strangs in das Halteelement und einer bestmöglichen Stabilisierung. Besonders günstig sind nach Einschätzung der Erfinder dabei Halteelemente, die als Halbröhren ausgebildet sind, d.h. längliche Aufnahmen mit einem durchgehend teilkreisförmigen Querschnitt, wobei entsprechende Halteelemente beispielsweise durch Zerlegung von röhrenförmigen Halbzeugen in einfacher Weise erhalten werden können. Bevorzugt ist entsprechend ein erfindungsgemäßes Verfahren, wobei das eine oder die mehreren Halteelemente zumindest abschnittsweise, bevorzugt über die gesamte Länge der Haltelemente, eine Aufnahme mit einen teilkreisförmigen, bevorzugt einen im Wesentlichen halbkreisförmigen, Querschnitt aufweisen. Besonders bevorzugt ist insoweit ein erfindungsgemäßes Verfahren, wobei das eine oder die mehreren Halteelemente zumindest abschnittsweise, bevorzugt über die gesamte Länge der Haltelemente, als Halbröhren ausgebildet sind. Insbesondere bei Fertigung der Halteelemente mittels Tiefziehens ist auch die Herstellung komplexerer Strukturen in effizienter Weise möglich, so dass für bestimmte Anwendungen der Einsatz von Halteelementen bevorzugt ist, die an unterschiedlichen Abschnitten des Halteelements unterschiedliche Querschnittsflächen aufweisen.

Bedingt durch die ausgezeichnete Stabilisierung, die mit den entsprechenden Halteelementen umsetzbar ist, ohne die strahlungsbasierte Aushärtung allzu nachteilig zu beeinflussen, ist es mit Blick auf die Herstellung von besonders präzise ausgelegten ummantelten Strängen bevorzugt, den Großteil des umwickelten Strangs bzw. des auszuhärtenden Teils des geformten Stranges in entsprechenden Halteelementen zu stabilisieren. Bevorzugt ist ein erfindungsgemäßes Verfahren, wobei das Anordnen des umwickelten Strangs in den Haltelementen so erfolgt, dass der umwickelte Strang zu mehr als 30 %, bevorzugt zu mehr als 50 %, besonders bevorzugt zu mehr als 70 %, ganz besonders bevorzugt zu mehr als 90 %, insbesondere bevorzugt zu mehr als 95 %, in dem einen oder den mehreren Halteelementen angeordnet ist, bezogen auf die Länge des umwickelten Strangs oder die Länge des mit elektromagnetischer Strahlung bestrahlten Teils des geformten Strangs, bevorzugt bezogen auf die Länge des mit elektromagnetischer Strahlung bestrahlten Teils des geformten Strangs.

Als besonders relevante Weiterentwicklung der vorstehend beschriebenen Verfahrensführung sehen es die Erfinder an, dass zu den Halteelementen komplementäre Deckelemente vorgesehen werden können, die analog zu den Halteelementen ebenfalls für elektromagnetische Strahlung durchlässig sind. Entsprechende Deckelemente können nach Anordnung des umwickelten Stranges in den Halteelementen auf diese aufgesetzt werden, um den derart geformten Strang abzudecken und dadurch beispielsweise gegen ungewollte Umwelteinflüsse, beispielsweise Feuchtigkeit oder Schmutzpartikel abzuschirmen. Zusätzlich oder alternativ dient das Deckelement auch einer zusätzlichen Fixierung des auszuhärtenden Stranges, wodurch eine besonders präzise Strangführung und eine dichte Packung der strangförmigen Elemente im ummantelten Strang gewährleistet werden kann. Entsprechende Systeme aus Halteelement und Deckelement können dabei besonders leicht aus rohrförmigen Halbzeugen gefertigt werden, die hierfür beispielsweise entlang der Längsrichtung mittig aufgeschnitten werden können. Bevorzugt ist ein erfindungsgemäßes Verfahren, wobei der umwickelte Strang nach dem Anordnen in den Halteelementen zumindest abschnittsweise, bevorzugt vollständig, durch ein oder mehrere Deckelemente abgedeckt, bevorzugt abgedeckt und fixiert, wird, wobei das eine oder die mehreren Deckelemente zumindest abschnittweise für elektromagnetische Strahlung der Wellenlänge λ zumindest teilweise durchlässig sind, wobei die Bestrahlung des Klebebandes mit der elektromagnetischen Strahlung der Wellenlänge λ zumindest teilweise durch das eine oder die mehreren Deckelemente hindurch erfolgt, wobei das eine oder die mehreren Deckelemente bevorzugt zu den Halteelementen komplementär sind, wobei das eine oder die mehreren Deckelemente besonders bevorzugt als zu den Halteelementen komplementäre Halbröhren ausgeführt sind.

Wie vorstehend erläutert, wählt der Fachmann die zum Aushärten verwendete Wellenlänge in Abhängigkeit von der eingesetzten aushärtbaren Klebemasse aus und stimmt dies auf die eingesetzten Halteelemente ab. Grundsätzlich ist es den Erfindern jedoch gelungen, für die bevorzugten aushärtbaren Klebemassen geeignete Wellenlängenbereiche zu identifizieren, die insbesondere im infraroten und ultravioletten Bereich liegen. Bevorzugt ist nämlich ein erfindungsgemäßes Verfahren, wobei das Aushärten der aushärtbaren Klebemasse mit elektromagnetischer Strahlung einer Wellenlänge λ im Bereich von 10 bis 380 nm, bevorzugt im Bereich von 200 bis 380 nm, erfolgt, und/oder wobei das Aushärten der aushärtbaren Klebemasse mit elektromagnetischer Strahlung mit einer Wellenlänge λ im Bereich von 780 nm bis 1 mm, bevorzugt im Bereich von 780 nm bis 50 µm, besonders bevorzugt im Bereich von 780 nm bis 3 µm, erfolgt, und/oder wobei das Aushärten der aushärtbaren Klebemasse mit elektromagnetischer Strahlung erfolgt, deren Intensitätsmaximum bei der Wellenlänge λ liegt.

Fürdie zum Aushärten eingesetzte elektromagnetische Strahlung hat es sich mit Blick auf die pro Fläche applizierte Energie als bevorzugt erwiesen, eine Energieflussdichte im Bereich von 8 bis 14 J/cm², bevorzugt 9 bis 12 J/cm², einzustellen.

Das Aushärten in Verfahrensschritt d) erfolgt zweckmäßigerweise durch eine geeignete Strahlungsvorrichtung, deren Emissionsspektrum auf die zur Aushärtung verwendete Wellenlänge λ abgestimmt wird. Als besonders vorteilhafte Ausgestaltung wird vorgeschlagen, dass die Strahlungsvorrichtung den geformten Strang zumindest abschnittsweise umschließt. Dies ist beispielsweise mit einer abgeschirmten Box möglich, wobei die Box bevorzugt an ihrer Innenseite spiegelnden Flächen aufweist, wobei in vorteilhafter Weise die eingesetzten Arbeitskräfte vor elektromagnetischer Strahlung geschützt werden. Alternativ kann die Aushärtung auch durch den Einsatz von mobilen Geräten erreicht werden, die beispielsweise eine zumindest teilweise ringförmige Beleuchtungsvorrichtung umfassen, mit der der geformte Strang quasi formschlüssig umgeben und damit von mehreren Seiten gleichzeitig ausgehärtet werden kann. Bevorzugt ist vor diesem Hintergrund ein erfindungsgemäßes Verfahren, wobei das Aushärten der aushärtbaren Klebemasse mit einer Strahlungsvorrichtung, bevorzugt einem UV-Strahler und/oder einem IR-Strahler, besonders bevorzugt einem UV-Strahler, erfolgt, wobei die Strahlungsvorrichtung bevorzugt dazu eingerichtet ist, den geformten Strang zumindest teilweise, bevorzugt im Wesentlichen formschlüssig, zu umschließen und den geformten Strang zumindest abschnittsweise über 70 % oder mehr, bevorzugt 80 % oder mehr, besonders bevorzugt 90 % oder mehr, ganz besonders bevorzugt 95 % oder mehr des Umfangs mit elektromagnetischer Strahlung der Wellenlänge λ zu bestrahlen, wobei die Strahlungsvorrichtung insbesondere bevorzugt eine Lichtkammer mit spiegelnden Flächen umfasst.

Für den Fachmann ist selbstverständlich, dass es zum Erhalt von mechanisch hoch belastbaren Ummantelungen zielführend ist, die Verfahrensführung so auszulegen, dass die aushärtbare Klebemasse hinreichend ausgehärtet wird, was der Fachmann durch die Bestrahlungsdauer und die Aushärtebedingungen beliebig einstellen kann. Inhärent bevorzugt ist deshalb ein erfindungsgemäßes Verfahren, wobei die aushärtbare Klebemasse in Verfahrensschritt d) zu mehr als 50 %, bevorzugt zu mehr als 70 %, besonders bevorzugt zu mehr als 90 %, ganz besonders bevorzugt zu mehr als 95 %, ausgehärtet wird.

Die Erfinder haben im Rahmen der Entwicklung der vorliegenden Erfindung erkannt, dass es trotz der im Wesentlichen strahlungsbasierten Härtung durch die einzusetzenden Halteelemente hindurch dennoch vorteilhaft ist, ein aktives Temperaturmanagement vorzusehen. Insbesondere werden ausgezeichnete mechanische Haltbarkeiten der erzeugten Ummantelungen erreicht, wenn vor dem Bestrahlen des geformten Stranges ein Vorwärmen stattfindet. Die erfindungsgemäße Ausführung der Halteelemente ermöglicht es hierbei in vorteilhafter Weise, beispielsweise dünne Heizdrähte vorzusehen, mit denen eine energieeffiziente Vortemperierung des geformten Stranges über große Abschnitte möglich wird, ohne die strahlungsbasierte Aushärtung allzu stark zu verringern. In ähnlicher Weise ist es auch günstig, während des Bestrahlens eine erhöhte Temperatur einzustellen. Besonders leistungsfähige Ummantelungen werden abschließend dann erreicht, wenn nach dem strahlungsbasierten Aushärten auch ein Nachhärten bei einer erhöhten Temperatur vorgesehen wird. Bevorzugt ist ein erfindungsgemäßes Verfahren, wobei das Aushärten in Verfahrensschritt d) vor dem Bestrahlen ein Vorwärmen des geformten Strangs bei einer Temperatur T₁ im Bereich von 20 bis 60 °C, bevorzugt im Bereich von 30 bis 50 °C, umfasst, und/oder wobei das Aushärten in Verfahrensschritt d) durch Bestrahlen bei einer Temperatur T₂ im Bereich von 20 bis 90 °C, bevorzugt im Bereich von 30 bis 80 °C, besonders bevorzugt im Bereich von 40 bis 70 °C, erfolgt, und/oder wobei das Aushärten in Verfahrensschritt d) nach dem Bestrahlen ein Nachhärten bei einer Temperatur T₃ im Bereich von 60 bis 150 °C, bevorzugt im Bereich von 70 bis 140 °C, besonders bevorzugt im Bereich von 80 bis 130 °C, umfasst. Hierbei ist es besonders bevorzugt, wenn im erfindungsgemäßen Verfahren sämtliche der Temperaturen T₁, T₂ und T₃ entsprechend eingestellt werden.

Der Fachmann versteht, dass auch der mit dem erfindungsgemäßen Verfahren herstellbare ummantelte Strang an sich vorteilhaft ist, da er über eine leistungsfähige Ummantelung verfügt, die in vorteilhafterweise frei ist von Materialfehlern, welche durch eine lokal unzureichende strahlungsbasierte Härtung verursacht wird. Offenbart wir deshalb im Zusammenhang mit der Erfindung auch ein ummantelter Strang, insbesondere einen Kabelbaum, hergestellt oder herstellbar mit dem erfindungsgemäßen Verfahren zur Ummantelung von strangförmigen Elementen.

Ein besonders großer Vorteil der Erfindung ist, dass die Klebemasse durch entsprechende Vorrichtungen über den gesamten Umfang sehr gut bestrahlt werden kann, weil das Klebeband, ob mit oder ohne Träger, die Kabel äußerlich ummantelt, so dass die auszuhärtende Klebemasse nicht von den Kabeln abgeschattet werden kann.

Für den Fachmann ist zudem klar, dass eine entsprechende Halteanordnung, wie sie im erfindungsgemäßen Verfahren eingesetzt wird, dadurch, dass sie die Durchführung des erfindungsgemäßen Verfahrens ermöglicht, inhärent ebenfalls vorteilhaft ist, wobei bevorzugte Halteanordnungen so ausgeführt werden, dass mit diesen bevorzugte erfindungsgemäße Verfahren durchgeführt werden können. Die Erfindung betrifft entsprechend auch eine Halteanordnung zur Einstellung einer vorbestimmten Form eines geformten Stranges in einem erfindungsgemäßen Verfahren, umfassend ein oder mehrere Halteelemente zur Aufnahme des umwickelten Strangs, wobei das eine oder die mehreren Halteelemente zumindest abschnittweise für elektromagnetische Strahlung der Wellenlänge λ zumindest teilweise durchlässig sind.

Weiterhin vorteilhaft ist, der Strang auch so geformt sein kann, dass er aus einer zweidimensionalen Ebene herausragt und eine räumliche Form annimmt, was insbesondere bei Abzweigungen von erhöhtem Interesse sein kann.

Bevorzugt ist dabei eine erfindungsgemäße Halteanordnung, wobei das eine oder die mehreren Halteelemente Teil von einem oder mehreren Trägerelementen der Halteanordnung sind, wobei die Halteelemente und/oder Trägerelemente bevorzugt reversibel und zerstörungsfrei lösbar mit der Halteanordnung verbunden sind.

Die Erfindung betrifft abschließend auch ein System zur Durchführung des erfindungsgemäßen Verfahrens, umfassend eine erfindungsgemäße Halteanordnung, und eine Strahlungsvorrichtung, bevorzugt einen UV-Strahler und/oder einen IR-Strahler, besonders bevorzugt einen UV-Strahler, wobei die Strahlungsvorrichtung bevorzugt dazu eingerichtet ist, einen geformten Strang zumindest teilweise zu umschließen und den geformten Strang zumindest abschnittsweise über 70 % oder mehr, bevorzugt 80 % oder mehr, besonders bevorzugt 90 % oder mehr, ganz besonders bevorzugt 95 % oder mehr des Umfangs mit elektromagnetischer Strahlung einer Wellenlänge λ zu bestrahlen.

Bevorzugt ist insoweit ein erfindungsgemäßes System, zusätzlich umfassend eine Temperiereinheit zur Einstellung der Temperatur des in der Strahlungsvorrichtung angeordneten geformten Stranges vor und/oder während und/oder nach dem Bestrahlen.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Darstellung des erfindungsgemäßen Verfahrens zu einem ersten Verfahrenszeitpunkt in einer bevorzugten Ausführungsform;
- Fig. 2: eine schematische Darstellung des erfindungsgemäßen Verfahrens zu einem zweiten Verfahrenszeitpunkt in einer bevorzugten Ausführungsform;
- Fig. 3: eine schematische Darstellung des erfindungsgemäßen Verfahrens zu einem dritten Verfahrenszeitpunkt in einer bevorzugten Ausführungsform;
- Fig. 4: eine schematische Darstellung des erfindungsgemäßen Verfahrens zu einem vierten Verfahrenszeitpunkt in einer bevorzugten Ausführungsform;
- Fig. 5: eine schematische Darstellung des erfindungsgemäßen Verfahrens zu einem fünften Verfahrenszeitpunkt in einer bevorzugten Ausführungsform; und
- Fig. 6: eine schematische Darstellung des erfindungsgemäßen Verfahrens zu einem sechsten Verfahrenszeitpunkt in einer bevorzugten Ausführungsform.

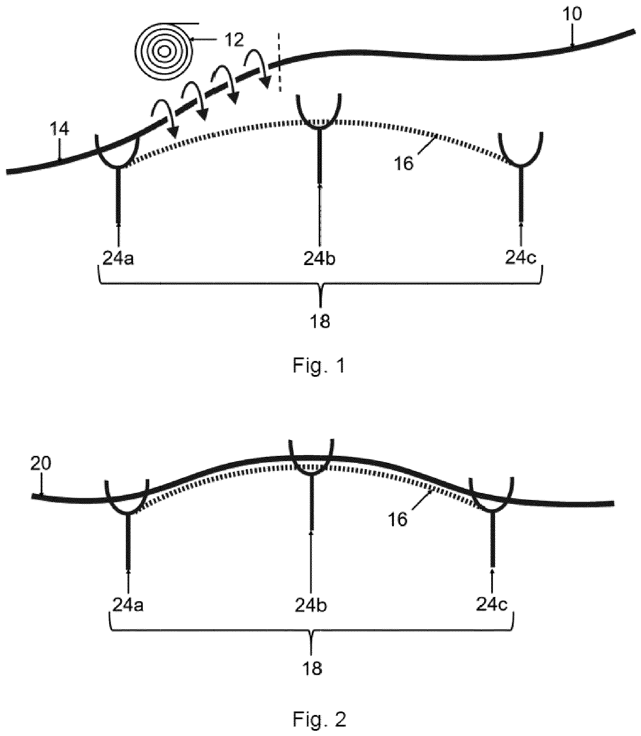

Fig. 1 zeigt eine schematische Darstellung des erfindungsgemäßen Verfahrens zu einem ersten Verfahrenszeitpunkt. Das für die Ummantelung vorgesehene strangförmige Element 10 ist im gezeigten Beispiel ein Kabelstrang, welcher eine Vielzahl von Kabeln umfasst, die durch den Einsatz von Klebeband untereinander verbunden sind, um eine Handhabung des strangförmigen Elements 10 zu erleichtern, wobei insoweit zusätzlich oder alternativ auch der Einsatz von Kabelbindern und Klemmen möglich wäre. Das strangförmige Element 10 ist dabei Bestandteil einer Makrostruktur, nämlich einem kompletten Kabelbaum, wie er für ein Kraftfahrzeug vorgesehen ist, wobei in Fig. 1 aus Gründen der Übersichtlichkeit lediglich ein Teilabschnitt gezeigt ist.

In Fig. 1 ist angedeutet, dass das strangförmige Element 10 mit einem Klebeband 12 umwickelt wird, um im umwickelten Bereich einen umwickelten Strang 14 zu erhalten. Das Umwickeln erfolgt dabei im gezeigten Beispiel in Schraubenlinien um das strangförmige Element 10, wobei jede nachfolgende Wicklung etwa zur Hälfte auf der vorangehenden Wicklung aufliegt. Das in Fig. 1 gezeigte strangförmige Element 10 ist dabei bereits etwa zur Hälfte mit Klebeband 12 umwickelt, was durch die gestrichelte Linie angedeutet wird.

Das Klebeband 12 umfasst eine aushärtbare Klebemasse, die zum Zwecke einer besseren Applikation als Haftklebemasse ausgeführt ist. Diese aushärtbare Klebemasse ist im gezeigten Beispiel strahlungshärtend. Insbesondere ist die aushärtbare Klebemasse durch Bestrahlung mit elektromagnetischer Strahlung einer Wellenlänge λ im ultravioletten Bereich, insbesondere im Bereich von 200 bis 380 nm aushärtbar. Das Klebeband 12 umfasst im gezeigten Beispiel ein poröses Vlies, in das die aushärtbare Klebemasse zu einem Massenanteil von etwas mehr als 50 % eingebettet ist. Das Vlies ist hierbei aus einem Kunststoff ausgebildet, welcher für elektromagnetische Strahlung einer Wellenlänge λ im ultravioletten Bereich teilweise durchlässig ist. Die aushärtbare Klebemasse basiert auf den in der EP 3693433 A1 offenbarten Systemen und umfasst beispielsweise neben Photoinitiator (Massenanteil 1%) ein Epoxidharz (Massenanteil 65 %) und ein Matrixpolymer (Massenanteil 34 %).

Die Halteanordnung 18 umfasst im gezeigten Beispiel drei Trägerelemente 24a, 24b, 24c, gleicher Länge mit jeweils einer gabelförmigen Halterung am Ende, wobei das mittlere Trägerelement 24b nach hinten versetzt ist, sodass die Trägerelemente 24a - 24c ein Dreieck aufspannen. In die Gabelung der Trägerelemente 24a - 24c ist in Fig. 1 ein Halteelement 16 eingesetzt, welches durch einen Formschluss reversibel und zerstörungsfrei lösbar mit den Trägerelementen 24a - 24c verbunden ist. Dieses durch die gestrichelte Linie angedeutete Halteelement 16 ist dabei als gebogene Halbröhre mit einem halbkreisförmigen Querschnitt ausgeführt, welche vollständig aus Polymethylmethacrylat ausgebildet ist, welches bei der gewählten Dicke der Röhrenseitenwand für elektromagnetische Strahlung der verwendeten Wellenlänge λ im UV-Bereich eine Durchlässigkeit von mehr als 95 % aufweist, sodass die Intensität der durch das Halteelement 16 auf den umwickelten bzw. geformten Strang 20 auftreffenden elektromagnetischen Strahlung der entsprechenden Wellenlänge beim Bestrahlen um weniger als 5 % reduziert wird.

In Fig. 2 ist nunmehr ausgehend von Fig. 1 gezeigt, wie der umwickelte Strang 14 in dem Halteelement 16 angeordnet wird, was durch einlegen des umwickelten Stranges 14 in die röhrenförmige Aufnahme des Halteelements 16 erfolgt, wobei der umwickelte Strang 14 die durch das Halteelement 16 vorgegebene Form annimmt und dadurch zum geformten Strang 20 wird, welcher bezogen auf die Länge des anschließend mit elektromagnetischer Strahlung auszuhärtenden Teils des geformten Strangs 20 zu mehr als 80 % in dem Halteelement 16 aufliegt.

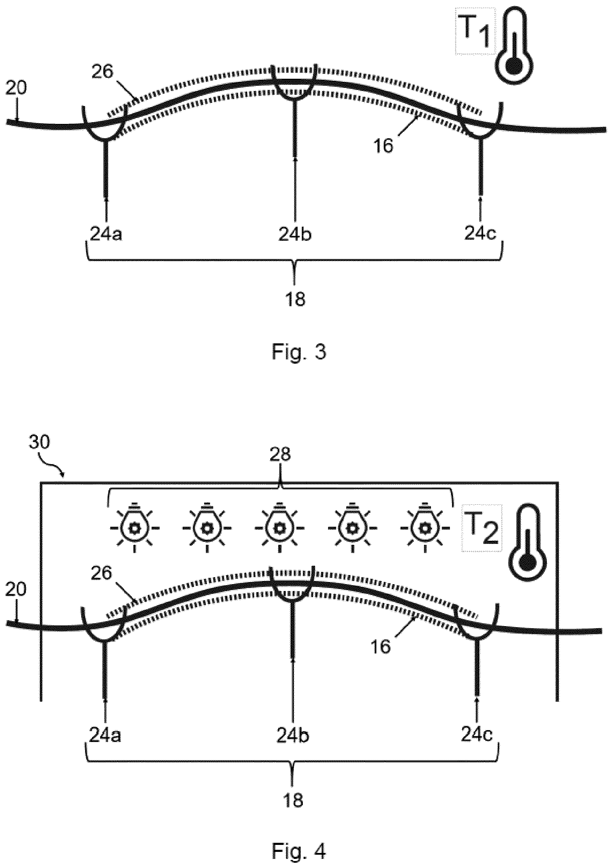

In der Fig. 3 ist nunmehr gezeigt, wie der geformte Strang 20 in dem Halteelement 16 zusätzlich über die gesamte Länge des Halteelements 16 mit einem zu diesem komplementären Deckelement 26 abgedeckt wird, welches ebenfalls als Halbröhre aus Polymethylmethacrylat ausgebildet ist. Durch dieses Deckelement 26 wird der geformte Strang 20 abgedeckt und fixiert. Hierbei ist in Fig. 3 angedeutet, dass der geformte Strang 20 in der Strahlungsvorrichtung 28 vor dem Aushärten auf eine Temperatur von etwa 40 °C vorgewärmt wird, um eine bevorzugte Verfahrensführung zu realisieren.

Wie in Fig. 4 gezeigt, wird der gemäß der Fig. 3 vorbereitete geformte Strang 20 anschließend durch Bestrahlen des Klebebandes 12 im geformten Strang 20 mit elektromagnetischer Strahlung einer Wellenlänge im ultravioletten Bereich ausgehärtet. Dies erfolgt in einem erfindungsgemäßen System 30, welches eine Strahlungsvorrichtung 28 umfasst, die vorliegend als Strahlungsbox ausgeführt ist, in der die angeordneten UV-Strahler durch die umgebende Box von der Außenwelt abgeschirmt sind. Hierbei wird bei der Aushärtung mittels Bestrahlung im Inneren der Strahlungsvorrichtung eine Temperatur von etwa 50 °C eingestellt. Die Applikation der elektromagnetischen Strahlung der Wellenlänge λ im ultravioletten Bereich erfolgt, wie in Fig. 4 ersichtlich, durch das Halteelement 16 und das Deckelement 26 hindurch, die durch die Materialauswahl jeweils im Wesentlichen über die gesamte Länge und den gesamten Umfang für elektromagnetische Strahlung der entsprechenden Wellenlänge weitgehend durchlässig sind.

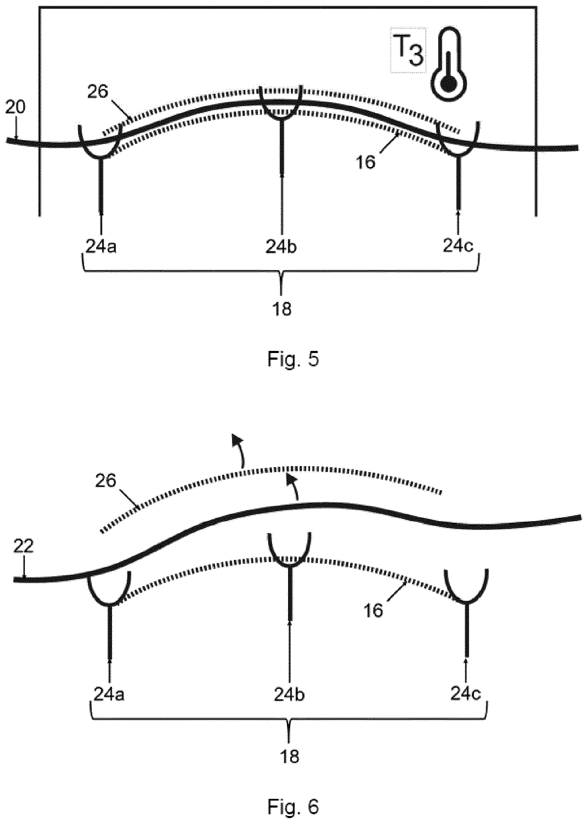

In Fig. 5 sind die UV-Strahler der Strahlungsvorrichtung 28 deaktiviert und es erfolgt ein Nachhärten bei einer Temperatur von etwa 100 °C. Abschließend ist in Fig. 6 zu erkennen, wie das Deckelement 26 entfernt wird, sodass der ummantelte Strang 22, d. h. das vom ausgehärteten Klebeband 12 umgebene strangförmige Element 10, welches die vorbestimmte Form aufweist, entnommen werden kann.

### Bezugszeichenliste

- 10: Strangförmiges Element
- 12: Klebeband
- 14: Umwickelter Strang
- 16: Halteelement
- 18: Halteanordnung
- 20: Geformter Strang
- 22: Ummantelter Strang
- 24a-c: Trägerelemente
- 26: Deckelement
- 28: Strahlungsvorrichtung
- 30: System

## Patentansprüche

1. Verfahren zur Ummantelung von strangförmigen Elementen (10), umfassend die Verfahrensschritte:
a) Herstellen oder Bereitstellen eines strangförmigen Elementes (10),
b) Umwickeln des strangförmigen Elementes (10) mit einem Klebeband (12) zum Erhalt eines umwickelten Strangs (14), wobei das Klebeband (12) als aushärtbare Klebemasse eine strahlungshärtende und/oder thermisch härtende Klebemasse umfasst, die vorzugsweise gleichzeitig haftklebrig ist,
c) Anordnen des umwickelten Strangs (14) in einem oder mehreren Halteelementen (16) einer Halteanordnung (18) zur Einstellung einer vorbestimmten Form und zum Erhalt eines geformten Strangs (20), und
d) Aushärten der aushärtbaren Klebemasse im geformten Strang (20) durch Bestrahlen des Klebebandes (12) mit elektromagnetischer Strahlung einer Wellenlänge λ zum Erhalt eines ummantelten Strangs (22),
wobei das eine oder die mehreren Halteelemente (16) zumindest abschnittweise für elektromagnetische Strahlung der Wellenlänge λ zumindest teilweise durchlässig sind,
wobei die Bestrahlung des Klebebandes (12) mit der elektromagnetischen Strahlung der Wellenlänge λ zumindest teilweise durch das eine oder die mehreren Halteelemente (16) hindurch erfolgt.

2. Verfahren nach Anspruch 1, wobei das Klebeband (12) als aushärtbare Klebemasse eine strahlungshärtende Klebemasse umfasst, wobei die strahlungshärtende Klebemasse bevorzugt eine UV-härtbare Klebemasse ist, wobei die UV-härtbare Klebemasse besonders bevorzugt durch Bestrahlung mit elektromagnetischer Strahlung mit einer Wellenlänge im Bereich von 10 bis 380 nm, ganz besonders bevorzugt im Bereich von 200 bis 380 nm, aushärtbar ist.

3. Verfahren nach Anspruch 1, wobei das Klebeband (12) als aushärtbare Klebemasse eine thermisch härtbare Klebemasse umfasst, wobei die thermisch härtbare Klebemasse bevorzugt dazu eingerichtet ist, dass die thermische Aushärtung durch elektromagnetische Strahlung im infraroten Bereich, besonders bevorzugt elektromagnetische Strahlung mit einer Wellenlänge im Bereich von 780 nm bis 1 mm, ganz besonders bevorzugt im Bereich von 780 nm bis 50 µm, insbesondere bevorzugt im Bereich von 780 nm bis 3 µm, befördert und/oder bewirkt, bevorzugt bewirkt, werden kann.

4. Verfahren nach einem der Ansprüche 1 bis 3, wobei das Klebeband (12) einen Träger umfasst, wobei die aushärtbare Klebemasse zumindest teilweise auf der Oberfläche des Trägers angeordnet ist.

5. Verfahren nach Anspruch 4, wobei der Träger zumindest abschnittsweise ein Trägermaterial umfasst, das für elektromagnetische Strahlung der Wellenlänge λ zumindest teilweise, bevorzugt im Wesentlichen vollständig, durchlässig ist.

6. Verfahren nach einem der Ansprüche 1 bis 5, wobei das Klebeband einen Träger und eine auf den Träger beschichtete aushärtbare Klebemasse in Form einer strahlungshärtenden und/oder thermisch härtenden Klebemasse aufweist oder vorzugsweise daraus besteht, die vollflächig aufgebracht ist und die gleichzeitig haftklebrig ist.

7. Verfahren nach einem der Ansprüche 1 bis 6, wobei das eine oder die mehreren Halteelemente (16) die für die Aufnahme des umwickelten Strangs (14) vorgesehenen Aufnahmebereiche von einem oder mehreren Trägerelementen (24a-c) der Halteanordnung (18) sind, wobei die Halteelemente (16) und/oder die Trägerelemente (24a-c) bevorzugt reversibel und zerstörungsfrei lösbar mit der Halteanordnung (18) verbunden sind.

8. Verfahren nach einem der Ansprüche 1 bis 7, wobei das eine oder die mehreren Halteelemente (16) über die gesamte Länge für elektromagnetische Strahlung der Wellenlänge λ zumindest teilweise durchlässig ist.

9. Verfahren nach einem der Ansprüche 1 bis 8, wobei das eine oder die mehreren Halteelemente (16) zumindest abschnittweise zu 30 % oder mehr, bevorzugt zu 50 % oder mehr, besonders bevorzugt zu 70 % oder mehr, besonders bevorzugt zu 90 % oder mehr, ganz besonders bevorzugt zu 95 % oder mehr, für elektromagnetische Strahlung der Wellenlänge λ durchlässig sind, bezogen auf das Verhältnis der Gesamtintensität der auf das Halteelement (16) eingestrahlten elektromagnetischen Strahlung der Wellenlänge λ im Verhältnis zu der Gesamtintensität der durch das Halteelement (16) durchtretenden elektromagnetischen Strahlung der Wellenlänge λ.

10. Verfahren nach einem der Ansprüche 1 bis 9, wobei das eine oder die mehreren Halteelemente (16) zumindest abschnittweise, bevorzugt zu 50 % oder mehr, besonders bevorzugt zu 70 % oder mehr, ganze besonders bevorzugt zu 90 % oder mehr, insbesondere bevorzugt im Wesentlichen vollständig, aus einem Material ausgebildet sind, welches für elektromagnetische Strahlung der Wellenlänge λ zumindest teilweise durchlässig ist, wobei das Material für elektromagnetische Strahlung der Wellenlänge λ bevorzugt einen Absorptionskoeffizienten α von 1,0 1/cm oder weniger, bevorzugt von 0,7 1/cm oder weniger, besonders bevorzugt von 0,4 1/cm oder weniger, ganz besonders bevorzugt von 0,2 1/cm oder weniger, aufweist.

11. Verfahren nach einem der Ansprüche 1 bis 10, wobei das Anordnen des umwickelten Strangs (14) in dem oder den Haltelementen (16) so erfolgt, dass der umwickelte Strang (14) zu mehr als 30 %, bevorzugt zu mehr als 50 %, besonders bevorzugt zu mehr als 70 %, ganz besonders bevorzugt zu mehr als 90 %, insbesondere bevorzugt zu mehr als 95 %, in dem einen oder den mehreren Halteelementen angeordnet ist, bezogen auf die Länge des umwickelten Strangs (14) oder die Länge des mit elektromagnetischer Strahlung bestrahlten Teils des geformten Strangs (20), bevorzugt bezogen auf die Länge des mit elektromagnetischer Strahlung bestrahlten Teils des geformten Strangs (20).

12. Verfahren nach einem der Ansprüche 1 bis 11, wobei der umwickelte Strang (14) nach dem Anordnen in dem oder den Halteelementen (16) zumindest abschnittsweise, bevorzugt vollständig, durch ein oder mehrere Deckelemente (26) abgedeckt, bevorzugt abgedeckt und fixiert, wird, wobei das eine oder die mehreren Deckelemente (26) zumindest abschnittweise für elektromagnetische Strahlung der Wellenlänge λ zumindest teilweise durchlässig sind, wobei die Bestrahlung des Klebebandes (12) mit der elektromagnetischen Strahlung der Wellenlänge λ zumindest teilweise durch das eine oder die mehreren Deckelemente (26) hindurch erfolgt.

13. Verfahren nach einem der Ansprüche 1 bis121, wobei das Aushärten der aushärtbaren Klebemasse mit einer Strahlungsvorrichtung (28), bevorzugt einem UV-Strahler und/oder einem IR-Strahler, besonders bevorzugt einem UV-Strahler, erfolgt, wobei die Strahlungsvorrichtung (28) bevorzugt dazu eingerichtet ist, den geformten Strang (20) zumindest teilweise, bevorzugt im Wesentlichen formschlüssig, zu umschließen und den geformten Strang zumindest abschnittsweise über 70 % oder mehr, bevorzugt 80 % oder mehr, besonders bevorzugt 90 % oder mehr, ganz besonders bevorzugt 95 % oder mehr, des Umfangs mit elektromagnetischer Strahlung der Wellenlänge λ zu bestrahlen.

14. Verfahren nach einem der Ansprüche 1 bis 13, wobei das Aushärten in Verfahrensschritt d) vor dem Bestrahlen ein Vorwärmen des geformten Strangs (20) bei einer Temperatur T₁ im Bereich von 20 bis 60 °C, bevorzugt im Bereich von 30 bis 50 °C, umfasst, und/oder
wobei das Aushärten in Verfahrensschritt d) durch Bestrahlen bei einer Temperatur T₂ im Bereich von 20 bis 90 °C, bevorzugt im Bereich von 30 bis 80 °C, besonders bevorzugt im Bereich von 40 bis 70 °C, erfolgt, und/oder
wobei das Aushärten in Verfahrensschritt d) nach dem Bestrahlen ein Nachhärten bei einer Temperatur T₃ im Bereich von 60 bis 150 °C, bevorzugt im Bereich von 70 bis 140 °C, besonders bevorzugt im Bereich von 80 bis 130 °C, umfasst.

15. Halteanordnung (18) zur Einstellung einer vorbestimmten Form eines geformten Stranges (20) in einem Verfahren nach einem der Ansprüche 1 bis 14, umfassend ein oder mehrere Halteelemente (16) zur Aufnahme des umwickelten Strangs (14), wobei das eine oder die mehreren Halteelemente (16) zumindest abschnittweise für elektromagnetische Strahlung der Wellenlänge λ zumindest teilweise durchlässig sind, wobei das eine oder die mehreren Halteelemente (16) Teil von einem oder mehreren Trägerelementen (24a-c) der Halteanordnung (18) sind, wobei die Halteelemente (16) und/oder Trägerelemente (24a-c) bevorzugt reversibel und zerstörungsfrei lösbar mit der Halteanordnung (18) verbunden sind.

16. System (30) zur Durchführung des Verfahrens nach einem der Ansprüche 1 bis 14, umfassend eine Halteanordnung (18) nach Anspruch 15, und eine Strahlungsvorrichtung (28), bevorzugt einen UV-Strahler und/oder einen IR-Strahler, besonders bevorzugt einen UV-Strahler, wobei die Strahlungsvorrichtung (28) bevorzugt dazu eingerichtet ist, einen geformten Strang (20) zumindest teilweise, bevorzugt im Wesentlichen formschlüssig, zu umschließen und den geformten Strang (20) zumindest abschnittsweise über 70 % oder mehr, bevorzugt 80 % oder mehr, besonders bevorzugt 90 % oder mehr, ganz besonders bevorzugt 95 % oder mehr des Umfangs mit elektromagnetischer Strahlung einer Wellenlänge λ zu bestrahlen.
